# EUROPÄISCHE PATENTSCHRIFT

(11) **EP 4 298 010 B1**
(45) Veröffentlichungstag und Bekanntmachung des Hinweises auf die Patenterteilung: **12.06.2024**
(21) Anmeldenummer: 22714103.3
(22) Anmeldetag: 23.03.2022
(51) Int. Cl.: B62J 1/26

(54) **AUFBLASBARER FAHRRADSATTEL**
INFLATABLE BICYCLE SEAT
SIÈGE DE BICYCLETTE GONFLABLE

(30) Priorität: 07.04.2021 AT 502502021
(43) Veröffentlichungstag der Anmeldung: 03.01.2024
(73) Patentinhaber: Blobber GmbH, 8042 Graz (AT)
(72) Erfinder: PASEMANN, Thomas, 8200 Gleisdorf (AT)
(74) Vertreter: Schwarz & Partner Patentanwälte GmbH
(86) Internationale Anmeldenummer: PCT/AT2022/060088
(87) Internationale Veröffentlichungsnummer: WO 2022/213135

(56) Entgegenhaltungen:
- CN-U- 212 667 564
- DE-C- 443 543
- DE-U1- 8 032 096
- US-A1- 2007 145 795
- US-B1- 9 637 193

## Beschreibung

Die Erfindung betrifft einen Sattel für Fahrräder umfassend einen oberen, aufblasbaren Softteil mit zumindest einem Ventil und einen unteren, starren Stützteil, wobei der Stützteil an der Unterseite des Softteils befestigt, vorzugsweise verschraubt, ist, wobei der Softteil zumindest eine erste Luftkammer im vorderen Sattelbereich und zumindest eine zweite Luftkammer im hinteren Sattelbereich umfasst, wobei der Softteil an der Unterseite zwischen der zumindest einen ersten Luftkammer und der zumindest einen zweiten Luftkammer eine keilförmige Ausnehmung aufweist, und der Sattel weiters einen starren Basisteil (3) aufweist, wobei der Basisteil (3) mit einer Sattelstrebe (5) zur Verbindung an einer Sattelstütze verbunden ist, und wobei der Stützteil (2) am Basisteil (3) mithilfe eines Koppelmechanismus lösbar fixierbar ist.

Sättel finden eine weite Verbreitung im Bereich der Fahrzeuge, insbesondere bei Fahrrädern bzw. Zweirädern und sollen speziell bei längerer Benutzung komfortabel und zugleich ergonomisch perfekt auf die Fahrerin/den Fahrer abgestimmt sein. Besonders Fahrräder sind heutzutage weit verbreitete und häufig genutzte Verkehrsmittel und zugleich aber auch Sportgeräte. Sättel für Fahrräder sollen demnach sowohl im Alltag als auch im Profisport die gewünschten Anforderungen erfüllen.

Ein wesentliches Problem marktüblicher Sättel ist, dass aufgrund mangelnder Durchblutung durch einen falschen Sattel, welcher zu breit, zu schmal, zu hart oder auch zu weich sein kann, Schmerzen im Gesäßbereich auftreten. Auch bei sehr lange Touren mit einem Fahrrad oder ähnlichem führt die Belastung infolge des langen Sitzens auf dem Sattel zumeist zu Schmerzen.

Im Stand der Technik sind Sättel für Fahrräder bekannt, welche diesem Problem begegnen, indem die Sättel Luftkammern bzw. Luftpolster aufweisen, die je nach gewünschter Festigkeit des Sattels mehr oder weniger aufgepumpt werden können. Dies soll den Sitzkomfort insbesondere bei längeren Touren erhöhen.

Ein Fahrradsattel mit Luftkammern gemäß dem Stand der Technik ist in US 9,440,695 B2 offenbart. Die aufblasbaren Luftkammern sind an der Oberseite des Sattels angeordnet und können mithilfe eines Luftkompressors in der Sattelstütze aufgepumpt werden. Zudem umfasst jede der Luftkammer ein separates Auslassventil, um Luft aus den einzelnen Luftkammern abzulassen. Zur Erhöhung des Sitzkomforts müssen daher in einem ersten Schritt alle Luftkammern durch den Luftkompressor aufgepumpt werden und in einem zweiten Schritt je nach gewünschter Härte des Sattels die Luft über die Ventile aus einzelnen oder mehreren Luftkammern wieder abgelassen werden. Dadurch ist eine individuelle Anpassung der einzelnen Luftkammern nur sehr kompliziert durchführbar und erfordert oftmals ein häufiges Wiederholen der angeführten Schritte. Sobald in einer Luftkammer über das zugehörige Ventil zu viel Luft abgelassen wurde, müssen alle vorhandenen Luftkammern erneut über den Luftkompressor aufgepumpt werden und die bereits eingestellten Luftkammern müssen erneut an den gewünschten Härtegrad angepasst werden. Ein weiterer Nachteil der in US 9,440,695 B2 offenbarten Sättel ist, dass die Form des Sattels im Wesentlichen nicht verändert werden kann, da Luftkammern auf einem starren, formgebenden Sattel aufliegen.

Dokument US540725 A offenbart weiters einen Fahrradsattel mit einem starren Unterteil und einem Softteil als Oberteil mit zwei unabhängigen Luftkammern ohne internen Luftaustausch und zwei Ventilen, wobei jedes der Ventile einer Luftkammer zugeordnet und mindestens ein Ventil an der Unterseite des Fahrradsattels angeordnet ist. Weiters sind in einer Luftkammer im hinteren Sattelbereich mehrere Lamellen zur Unterteilung angeordnet. Nachteilig bei diesem Sattel ist, dass dieser beim Fahrrad im Freien und ungeschützt vor Diebstahl verbleibt, da seine Demontage und Montage aufwändig ist.

Dokument US2007145795A1 wird als der nächste Stand der Technik angesehen und zeigt einen Sattel für Fahrräder umfassend: einen oberen, aufblasbaren Softteit umfassend zumindest ein Luftventil, einen unteren, starren Stützteil, wobei der Stützteil an der Unterseite des Softteils befestigt, vorzugsweise verschraubt oder verklebt, ist, wobei der Softteil zumindest eine erste Luftkammer im vorderen Sattelbereich umfasst, einen starren Basisteil, wobei der Basisteil mit einer Sattelstrebe zur Verbindung an einer Sattelstütze verbunden ist, wobei der Stützteil am Basisteil mithilfe eines Koppelmechanismus lösbar fixierbar ist.

Daher ermöglichen die im Stand der Technik bekannten Sättel mit Luftkammern keine individuelle Anpassung an den Fahrzeugtyp, den Fahrstil und die Physiologie der Fahrerin/des Fahrers. Durch Variieren der Luftmenge in den Luftkammern kann nur die Härte des Sattels verändert werden. Somit erlauben die bekannten Sättel zwar eine Erhöhung der Bequemlichkeit, jedoch keine Anpassung an physiologische oder sportliche Bedürfnisse der FahrerInnen.

Die Aufgabe der vorliegenden Erfindung ist einen Sattel für Fahrräder bereitzustellen, welcher die angeführten Nachteile des Standes der Technik vermeidet.

Erfindungsgemäß wird die vorliegende Aufgabe durch die Bereitstellung eines Sattels für Fahrräder mit den Merkmalen von Anspruch 1 gelöst.

Der erfindungsgemäße Sattel für Fahrräder umfasst einen oberen, aufblasbaren Softteil mit zumindest einem Ventil und einen unteren, starren Stützteil, wobei der Stützteil an der Unterseite des Softteils befestigt, vorzugsweise verschraubt oder verklebt, ist, wobei der Softteil zumindest eine erste Luftkammer im vorderen Sattelbereich und zumindest eine zweite Luftkammer im hinteren Sattelbereich umfasst, wobei der Softteil an der Unterseite zwischen der zumindest einen ersten Luftkammer und der zumindest einen zweiten Luftkammer eine keilförmige Ausnehmung aufweist.

Durch die Ausführung des Sattels mit einem separaten Softteil mit der erfindungsgemäßen keilförmigen Ausnehmung zwischen erster und zweiter Luftkammer wird der Vorteil erreicht, dass im Vergleich zum Stand der Technik ein äußerst flexibel anpassbarer und ergonomisch vorteilhafter Sattel mit Luftkammern bereitgestellt wird. Das erfindungsgemäße Softteil erhöht nicht nur die Bequemlichkeit des Sattels, sondern auch dessen Einsatzbreite und Anpassbarkeit an individuelle Bedürfnisse um ein Vielfaches. Der Softteil ist im Wesentlichen ein flexibler Hohlkörper, der die beiden Luftkammern ausbildet.

Mithilfe des zumindest einen Ventils können die erste und zweite Luftkammer bis zur gewünschten Härte aufgepumpt werden. Besonders bevorzugt kann über das zumindest eine Ventil Luft auch wieder abgelassen werden, um einen weicheren Sattel zu ermöglichen. Die keilförmige Ausnehmung erlaubt eine variierbare Neigung zwischen den Luftkammern. Dadurch kann das Softteil an unterschiedlich geneigten Stützteilen befestigt werden.

Der erfindungsgemäße Sattel kann für unterschiedlichste Fahrzeuge, welche die Verwendung eines Sattels vorsehen, eingesetzt werden. Insbesondere kann der Sattel in Verbindung mit jeglicher Art von motorisierten oder nicht motorisierten Zweirädern wie beispielsweise Mofas, Motorrädern, Roller oder Fahrrädern, aber auch für Einräder verwendet werden. Aufgrund der Flexibilität des erfindungsgemäßen Sattels kann dieser auch auf alle Typen von Fahrrädern wie zum Beispiel Rennräder, Mountainbikes, Trekkingräder, Alltagsräder und elektrisch angetriebene Fahrräder (E-Bikes) angepasst werden.

Besonders bevorzugt bildet die keilförmige Ausnehmung Flanken aus, welche einen Neigungswinkel zwischen 0° und 30° einschließen. Das Softteil ist somit kompatibel mit unterschiedlich geneigten Stützteilen. Eine individuelle Anpassung der Sattelneigung bietet die folgenden Vorteile. Bei einem an einem Fahrrad montierten Sattel bewirkt ein kleiner Neigungswinkel eine bessere Kraftübertragung auf die Pedale des Fahrrads, da der Drehpunkt im Knie der Fahrerin/des Fahrers vor der Pedalachse liegt. Die Neigung des vorderen Sattelbereichs in Richtung Pedale ermöglicht daher eine größere Druckausübung nach unten auf die Pedale. Durch den auf die Pedale ausgeübten Druck wird auch ein Vorrutschen des Fahrers/der Fahrerin verhindert und die optimale Sitzposition kann dauerhaft eingehalten werden. Außerdem können bei komplett waagrecht ausgerichteten Sätteln Schmerzen auftreten, welche durch die Neigung verhindert werden können. Durch die Sattelneigung wird das Becken nach vorne gekippt, wodurch sich automatisch die Krümmung in der Lendenwirbelsäule verringert. Eine Anpassung der Sattelneigung an die gewünschte Beckenkippung verhindert daher eine unnötige Überlastung der Lendenwirbelsäule. Somit lässt sich der Sattel auch an die Physiologie der FahrerInnen anpassen.

In einer bevorzugten Ausführungsvariante ist der Softteil aus einem Material ausgewählt aus der Gruppe bestehend aus Polyurethan (PU), thermoplastische Elastomere (TPE), Silikon und Gummi gefertigt. Besonders bevorzugt besteht der Softteil aus Polyurethan. Die Verwendung eines elastischen Werkstoffs ergibt den Vorteil einer sehr hohen Flexibilität, wodurch einerseits die Form und Härte des Sattels durch die Luftmenge in den Luftkammern und andererseits die Neigung des Softteils mithilfe der keilförmigen Ausnehmung sehr gut variiert werden kann.

Bevorzugt ist das Stützteil im Wesentlichen gleich lang wie das Softteil, aber weniger breit als das Softteil. Während sich das Softteil im hinteren Sattelbereich gemäß einer gängigen Sattelform eine wesentlich größere Breite als im vorderen Sattelbereich aufweist, kann die Breite des Stützteils im hinteren Sattelbereich nur geringfügig größer als im vorderen Sattelbereich sein.

Weiters kann der Sattel zumindest ein erstes und ein zweites Luftventil umfassen, welche vorzugsweise an der Unterseite des Softteils angebracht sind. Dadurch befinden sich die Ventile an einer sehr geschützten Position. Bevorzugt ist das erste Luftventil mit der ersten Luftkammer und das zweite Luftventil mit der zweiten Luftkammer verbunden, wobei mithilfe der Luftventile die Luftkammern auf- und abpumpbar sind. Hierdurch wird der Vorteil erreicht, dass über ein einziges Luftventil Luft in der dazugehörigen Luftkammer ab- und eingelassen werden kann. Jede der Luftkammern kann durch das zugehörige Luftventil separat bis zum gewünschten Härtegrad aufgepumpt werden und gegebenenfalls auch wieder abgepumpt werden. Bei den Luftventilen kann es sich um konventionelle Fahrradventile handeln, welche ein Auf- und Abpumpen der Luftkammern mittels gängiger Luftpumpen oder Luftkompressoren, welche auch zum Aufpumpen der Fahrradreifen verwendet werden, erlauben.

Gemäß einer weiteren Ausführungsvariante weist der Stützteil Ausnehmungen auf, durch welche sich die zumindest zwei an der Unterseite des Softteils angebrachten Luftventile erstrecken. Außerdem kann der Softteil an der Unterseite eine Ausnehmung aufweisen, welche im Wesentlichen der Grundform des Stützteils entspricht. Hierdurch lässt sich der Stützteil sozusagen in den Softteil integrieren und kann eine Einheit mit diesem bilden. Sofern sich die Luftventile an der Unterseite des Softteils befinden, können sich diese durch die Ausnehmungen des Stützteils erstrecken und sind daher auch nach der Befestigung des Softteils am Stützteil leicht zugänglich.

In einer weiteren Ausführungsvariante kann der Stützteil direkt mit dem Softteil eingegossen werden. Die Ventile können wiederum auf dieselbe Weise mit dem Softteil eingegossen werden. Dadurch wird eine formschlüssige Verbindung des Stützteils bzw. der Ventile mit dem Softteil ermöglicht. Somit können Schwachstellen an den Verbindungsstellen, an welchen beispielsweise Schrauben oder Nieten eingebracht werden, vermieden werden. Beispielsweise kann der Stützteil auch durch thermisches Direktfügen mit dem Softteil verbunden werden. Dabei wird das Stützteil erhitzt und dann mit dem Softteil in Verbindung gebracht, welches an den Verbindungsstellen aufschmilzt und nach dem Erstarren einen festen Verbund mit dem Stützteil bildet. Auf dieselbe Art und Weise kann auch das zumindest eine Ventil, bevorzugt das erste und zweite Luftventil, mit dem Softteil verbunden werden.

Bevorzugt finden zwischen der ersten und zweiten Luftkammer kein Luftaustausch statt. Dadurch kann einerseits die Härte des vorderen Sattelbereichs unabhängig vom hinteren Sattelbereich und andererseits die Neigung des Softteils mithilfe der keilförmigen Ausnehmung eingestellt werden. Mithilfe der zwei Luftventile können die erste und zweite Luftkammer unabhängig voneinander auf- und abgepumpt werden. Der Softteil des Sattels passt sich damit individuell an den Körper an und aufgrund der im hinteren Sattelbereich angeordneten zweiten Luftkammer ist auch eine Bewegung des Beckens in horizontaler Ebene, die sogenannten Beckenschauckel, möglich. Die Tretbewegung ähnelt dadurch der des natürlichen, gesunden Gehens und der Tritt wird entspannter und runder, wodurch eine frühzeitige Ermüdung verhindert wird. Zudem werden die Bandscheiben, der Bereich der Lendenwirbelsäule, der Dammbereich und die Prostata weniger belastet.

Des Weiteren können in der zweiten Luftkammer im hinteren Sattelbereich Lamellen angeordnet sein. Diese Lamellen optimieren den Luftaustauschzwischen linker und rechter Seite des hinteren Sattelbereichs bei einer Tretbewegung, indem die Verdrängung der Luft verzögert wird, sodass sich der Sattel optimal an Bewegungen einer Fahrerin/eines Fahrers anpassen kann. Eine gleichmäßige Verteilung der Luft ermöglicht eine Anpassung des Sattels an die Beckenbewegungen und die Pendelbewegung beim Fahren wird wiederum unterstützt.

Außerdem kann das Stützteil aus Metall gefertigt sein. Dadurch weist das Stützteil eine große Stabilität auf.

Gemäß einer weiteren Ausführungsvariante weist das Stützteil im vorderen Sattelbereich und im hinteren Sattelbereich jeweils ein vorderes und ein hinteres Verbindungsmittel auf. Diese Verbindungsmittel dienen der Befestigung des Sattels an einem Fahrrad oder ähnlichem. Beispielsweise kann der Stützteil mithilfe der Befestigungsmittel an einer Sattelstrebe befestigt werden, welches wiederum mit einer Sattelstütze verbunden werden kann.

In einer anderen Ausführungsform des erfindungsgemäßen Sattels weist dieser zusätzlich einen starren Basisteil auf. Bevorzugt kann der Basisteil mit einer Sattelstrebe zur Verbindung an einer Sattelstütze verbunden werden und der Stützteil am Basisteil mithilfe eines Koppelmechanismus lösbar fixiert werden. In dieser Ausführungsvariante ergibt sich der Vorteil, dass der Stützteil samt Softteil einfach vom Basisteil abgenommen werden kann, welches mithilfe der Sattelstrebe auf allen gängigen Sattelstützen montiert werden kann. Somit besteht der Sattel im Wesentlichen aus zwei Komponenten. Einer oberen Komponente umfassend den Stützteil samt Softteil und einer unteren Komponente umfassend den Basisteil und eventuell eine Sattelstrebe zur Verbindung an einer Sattelstütze. Durch das einfache Auf- und Absetzen der oberen Komponente an der unteren Komponente kann einerseits ein Diebstahl der oberen Komponente, also des eigentlichen Sattels, und andererseits bei der ganzjährigen Verwendung des Sattels beispielsweise in Zusammenhang mit einem als Verkehrsmittel genutzten Fahrrad ein nasser, heißer oder eiskalter Sattel verhindert werden. Auch kann der Diebstahl des Fahrrads erschwert werden, wenn das Fahrrad nur mit der unteren Komponente abgestellt wird und ein Dieb ohne Sattel flüchten müsste.

Gemäß einer bevorzugten Ausführungsvariante umfassen der Basisteil und der Stützteil Verbindungsmittel, welche nach Art einer Schnappverbindung zusammenwirken. Der Stützteil kann dadurch äußerst einfach am Basisteil eingeschnappt werden und auf dieselbe einfache Art und Weise wieder ausgehängt werden. Es werden somit keine Werkzeuge benötigt, um das Stützteil mit dem Basisteil zu verbinden. Zudem erlaubt die Schnappverbindung eine sichere Verbindung der beiden Komponenten.

Weiters kann der Stützteil im hinteren Sattelbereich einen Verriegelungsabschnitt mit einer Ausnehmung umfassen, mit welcher ein Schnapphaken an der Hinterseite des Basisteils lösbar verbunden werden kann. Im vorderen Sattelbereich kann der Stützteil einen Einhängehaken umfassen, welcher an der Vorderseite des Basisteils eingehängt werden kann. Diese Verbindungsmittel ermöglichen eine sehr einfache Schnappverbindung. Genauer gesagt, wird zur Kopplung der Komponenten des Sattels der Einhängehaken des Stützteil zuerst an der Vorderseite des Basisteils eingehängt und danach der hintere Bereich des Stützteils so weit nach unten gedrückt, bis der Schnapphaken des Basisteils in der Ausnehmung des Stützteils einschnappt. Beim Abnehmen des Stützteils vom Basisteil wird in umgekehrter Reihenfolge zuerst der Schnapphaken des Basisteils nach innen gedrückt, sodass der Schnapphaken aus der Ausnehmung des Stützteils gelöst werden kann und der hintere Bereich des Stützteils nach oben bewegt werden kann. Danach kann noch der Einhängehaken vom Basisteil gelöst werden.

Des Weiteren kann der Basisteil Ausnehmungen aufweisen. Durch diese Ausnehmungen können wiederum die Luftventile des Softteils geführt werden, sofern sich diese an der Unterseite des Softteils befinden. Somit sind die Luftventile auch nach der Verbindung des Basisteils mit dem Stützteil weiterhin frei zugänglich.

Bevorzugt weist der Basisteil eine sattelförmige Form auf. Weiters kann der Basisteil aus Kunststoff gefertigt sein. Hierdurch ergibt sich der Vorteil, dass bei einem etwaigen Defekt des Softteils ein Weiterfahren auf dem Basisteil möglich ist.

Vorteilhafte Ausgestaltungen des erfindungsgemäßen Sattels, sowie alternativer Ausführungsvarianten werden in weiterer Folge anhand der Figuren näher erläutert.

Dabei zeigt:
Fig. 1 eine Explosionsdarstellung des erfindungsgemäßen Sattels samt Basisteil.
Fig. 2 eine Unteransicht des erfindungsgemäßen Sattels.
Fig. 3 eine Seitenansicht des erfindungsgemäßen Sattels.
Fig. 4 eine perspektivische Ansicht des Basisteils.
Fig. 5 eine perspektivische Ansicht des erfindungsgemäßen Sattels samt Basisteil.
Fig. 6 eine Vorderansicht des erfindungsgemäßen Sattels samt Basisteil.

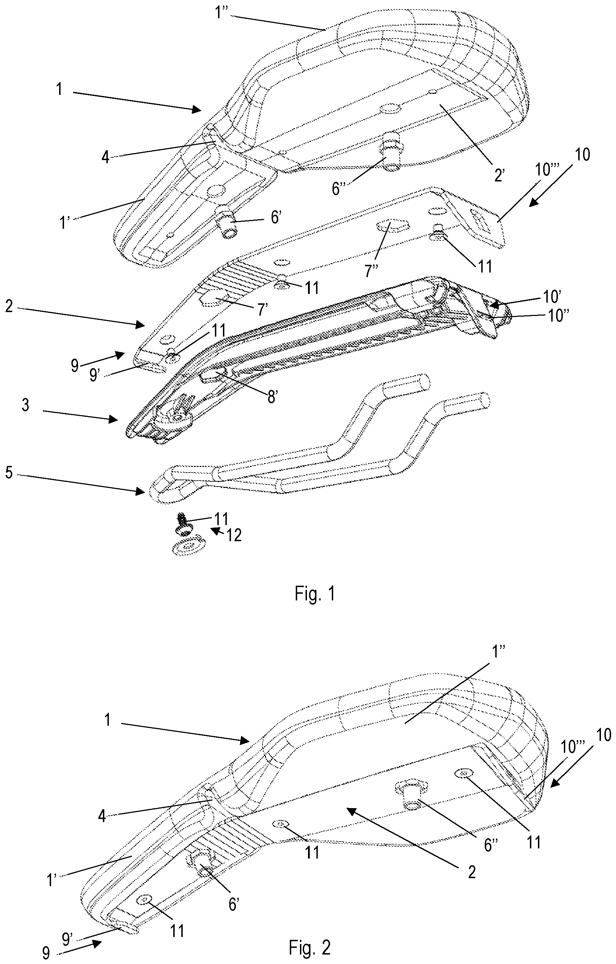

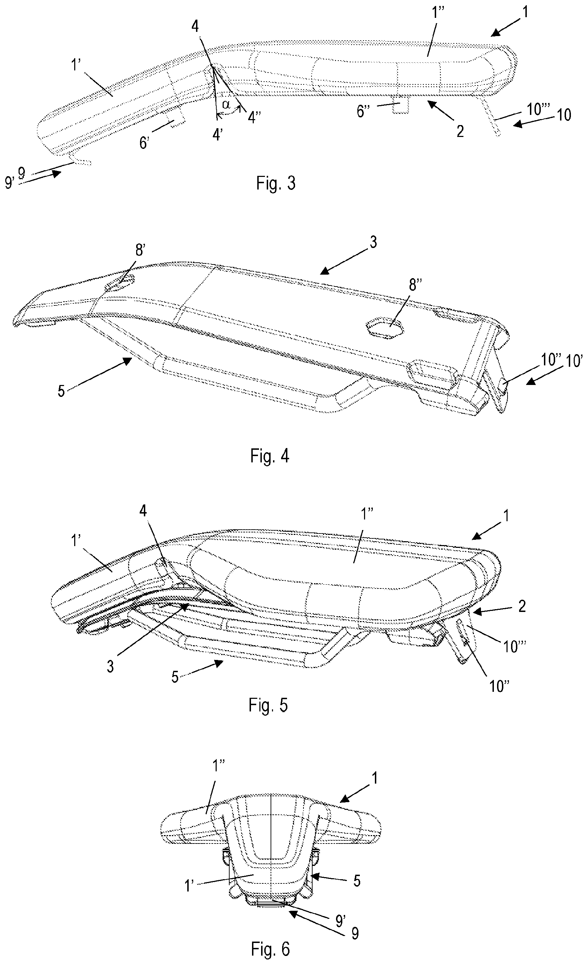

Wie in Fig. 1 dargestellt umfasst der erfindungsgemäße Sattel einen oberen, aufblasbaren Softteil 1 und einen unteren, starren Stützteil 2. Der Stützteil 2 kann mithilfe von Verbindungsmittel an der Unterseite des Softteils 1 fixiert werden, wie dies in Fig. 2 dargestellt ist. Außerdem kann der Stützteil 2 auch an der Unterseite des Softteils 1 verklebt werden, direkt mit diesem eingegossen werden oder eventuell mithilfe eines thermischen Direktfügeverfahrens mit dem Softteil 1 verbunden werden. Bevorzugt handelt es sich bei den Verbindungsmittel um Schrauben 11, welche wie in Fig. 2 gezeigt bündig im Stützteil 2 versenkt werden können. Vorzugsweise umfasst der Softteil 1 zumindest eine erste Luftkammer 1' im vorderen Sattelbereich und zumindest eine zweite Luftkammer 1" im hinteren Sattelbereich, sowie zumindest ein Luftventil 6', 6". Vorne, hinten, oben und unten ist im Rahmen dieser Beschreibung jeweils auf ein am Boden stehendes Fahrrad mit dem erfindungsgemäßen Sattel bezogen. Außerdem weist der Softteil 1 an der Unterseite zwischen der ersten und zweiten Luftkammer 1', 1" eine keilförmige Ausnehmung 4 auf. Diese keilförmige Ausnehmung 4 ermöglicht eine Änderung der Neigung des Softteils 1. Genauer gesagt, kann mithilfe der keilförmigen Ausnehmung 4 der Neigungswinkel α, siehe Fig. 3, zwischen den Flanken (4',4") der keilförmigen Ausnehmung 4 geändert werden, wodurch die erste Luftkammer 1' zur zweiten Luftkammer 1" stärker oder schwächer geneigt werden kann. Der Softteil 1 kann daher an unterschiedlich geneigte Stützteile 2 angepasst werden. Bevorzugt befindet sich die keilförmige Ausnehmung 4 zwischen der Nase des Sattels und der Sitzfläche des Sattels.

In der in Fig. 1 - 3 gezeigten Ausführungsvariante umfasst der Softteil 1 ein erstes Luftventil 6' und ein zweites Luftventil 6", bei welchen es sich um gängige Fahrradventile handeln kann. Die Luftventile 6', 6" können vorzugsweise im Softteil 1 verschraubt sein oder direkt mit dem Softteil 1 eingegossen werden. Die beiden Luftventile 6', 6" sind wie in den Fig. 2 dargestellt besonders bevorzugt an der Unterseite des Softteils 1 angebracht. Dies bietet eine besonders geschützte Position für die Luftventile 6', 6", welche somit vor Stößen oder Schmutz geschützt sind. Dennoch sind die Luftventile 6', 6" an der Unterseite des Softteils 1 leicht zugänglich und können von dieser Position aus bequem mit einer Luftpumpe oder einem Kompressor erreicht werden. Das erste Luftventil 6' ist mit der ersten Luftkammer 1' und das zweite Luftventil 6" ist mit der zweiten Luftkammer 1" verbunden. Dadurch können die Luftkammern 1', 1" mithilfe der Luftventile 6', 6" auf- und abgepumpt werden. In einer Ausführungsvariante ist die erste Luftkammer 1'mit der zweiten Luftkammer 1" im Softteil 1 verbunden, wodurch sich in beiden Luftkammern 1', 1" der gleiche Druck einstellt.

In einer bevorzugten Ausführungsvariante findet zwischen der ersten und zweiten Luftkammer 1', 1" kein Luftaustausch statt. Das heißt, die Luftkammern 1', 1" können mittels der Luftventile 6', 6" separat auf- und abgepumpt werden und einen unterschiedlichen Härtegrad aufweisen. Es wäre ebenfalls möglich anstatt Luft ein anderes gasförmiges Medium in die Luftkammern 1', 1" zu pumpen.

Des Weiteren kann der Stützteil 2 wie in den Fig. 1 und 2 gezeigt Ausnehmungen 7', 7" aufweisen, durch welche sich die zumindest zwei an der Unterseite des Softteils 1 angebrachten Luftventile 6', 6" erstrecken können. Dadurch sind die Luftventile 6', 6" trotz an dem Softteil 1 montiertem Stützteil 2 noch frei zugänglich.

Wie in Fig. 1 ersichtlich, kann der Softteil 1 an der Unterseite eine Ausnehmung 2' aufweisen, welche im Wesentlichen der Grundform des Stützteils 2 entspricht. Das heißt, das Stützteil 2 kann in diese Ausnehmung 2' eingebracht werden und wie in Fig. 2 dargestellt bündig an der Unterseite des Softteils 1 montiert werden. Hierdurch kann ein Verrutschen des am Softteil 1 montierten Stützteils 2 verhindert werden.

Bevorzugt ist die Breite des Stützteils 2 wie in den Fig. 1 - 3 dargestellt kleiner als die Breite des Softteils 1. Wie in den Fig. 5 und 6 ersichtlich weist der Softteil 1 speziell im hinteren Sattelbereich eine sattelförmige Form auf, während der Stützteil 2 im hinteren Bereich entweder gleich breit oder nur geringfügig breiter als im vorderen Bereich ausgeführt sein kann. Da der Stützteil 2 nur eine Stützfunktion erfüllt, muss dieser keine sattelförmige Form aufweisen.

In einer weiteren Ausführungsvariante sind in der zweiten Luftkammer 1" im hinteren Sattelbereich Lamellen angeordnet. Mithilfe der Lamellen ergibt sich ein gleichmäßiger Luftaustausch innerhalb der zweiten Luftkammer 1" während sich ein Fahrer/eine Fahrerin am Sattel bewegt. Genauer gesagt, verzögern die Lamellen den Luftaustausch innerhalb der zweiten Luftkammer 1". Beispielsweise bei Verwendung des erfindungsgemäßen Sattels an Fahrrädern kann sich der Softteil 1 somit an die Tretbewegungen einer Fahrerin/eines Fahrers anpassen.

Gemäß Fig. 1-3 kann der Stützteil 2 im vorderen Sattelbereich bzw. im hinteren Sattelbereich ein vorderes Verbindungsmittel 9 und ein hinteres Verbindungsmittel 10 umfassen. Diese Verbindungsmittel 9, 10 können der Verbindung des Stützteils 2 samt Softteil 1 mit einer Sattelstrebe 5, einer Sattelstütze oder einem anderen Verbindungsteil dienen, welche wiederum an einem Fahrrad oder ähnlichem angebracht sind.

In einer weiteren Ausführungsvariante umfasst der Sattel wie in Fig. 1 gezeigt einen starren Basisteil 3. Der in Fig. 4 dargestellte Basisteil 3 kann mit einer Sattelstrebe 5 zur Verbindung an einer Sattelstütze verbunden sein. Der Stützteil 2 kann dabei am Basisteil 3 mithilfe eines Koppelmechanismus lösbar fixiert werden, siehe Fig. 5. Das heißt, der Stützteil 2 kann mitsamt dem Softteil 1 bei Nichtbenutzung vom Basisteil 3 gelöst werden und separat gelagert werden. Der Softteil 1 kann dadurch vorteilhafterweise vor jeglichen Witterungsverhältnissen geschützt werden, speziell wenn das Fahrrad oder das Fahrzeug, auf welchem der Sattel montiert ist, im Freien abgestellt wird. Zudem wird auch ein Diebstahl des Sattels vermieden.

Besonders bevorzugt umfassen der Basisteil 3 und der Stützteil 2, wie in Fig. 1 gezeigt, Verbindungsmittel 9, 10, 10', welche nach Art einer Schnappverbindung zusammenwirken. Dadurch kann der Stützteil 2 sehr einfach am Basisteil 3 fixiert werden und wieder gelöst werden.

Die Schnappverbindung kann gemäß Fig. 1 folgendermaßen ausgeführt sein. Der Stützteil 2 kann im hinteren Sattelbereich einen Verriegelungsabschnitt mit einer Ausnehmung 10‴ umfassen, mit welcher ein Schnapphaken 10" an der Hinterseite des Basisteils 3 lösbar verbunden werden kann. Der Stützteil 2 kann im vorderen Sattelbereich einen Einhängehaken 9' umfassen, welcher an der Vorderseite des Basisteils 3 eingehängt werden kann. Bei dieser Ausführungsvariante der Verbindungsmittel 9, 10, 10' kann der Stützteil 2 samt Softteil 1 am Basisteil 3 fixiert werden, indem zuerst der Einhängehaken 9' an der Vorderseite des Basisteils 3 eingehängt wird und danach der hintere Sattelbereich solange nach unten gedrückt wird, bis der Schnapphaken 10" des Basisteils 3 an dem Verriegelungsabschnitt mit der Ausnehmung 10‴ des Stützteils 2 einschnappt und der Stützteil 2 am Basisteil 3 mittels Schnappverbindung gemäß Fig. 5 fixiert ist. Beim Lösen des Stützteils 2 vom Basisteil 3 wird in umgekehrter Reihenfolge zuerst der Schnapphaken 10" nach innen gedrückt, sodass der Verrieglungsabschnitt vom Schnapphaken 10" gelöst werden kann und danach der Einhängehaken 9' vom Basisteil 3 ausgehängt. Besonders bevorzugt sind der Verrieglungsabschnitt mit der Ausnehmung 10‴ und der Schnapphaken 10" im Wesentlichen senkrecht zum Stützteil 2 bzw. zum Basisteil 3 angeordnet.

Gemäß der Ausführungsvariante in Fig. 4 kann der Basisteil 3 weiters Ausnehmungen 8', 8" aufweisen, durch welche wieder die Luftventile 6', 6" des Softteils 1 geführt werden können. Dadurch können die Luftkammern 1', 1" auch nach dem Fixieren des Stützteils 2 am Basisteil 3 noch auf- und abgepumpt werden, da die Luftventile 6', 6" frei zugänglich sind.

Außerdem kann der Basisteil 3 eine sattelförmige Form aufweisen. Hierdurch kann bei einem eventuellen Defekt des Softteils 1 der Basisteil 3 als Sattel verwendet werden und das Fahrrad oder Fahrzeug, auf welchem der Sattel montiert ist, weiterhin benützt werden.

Die Sattelstrebe 5 kann beispielsweise wie in den nicht einschränkenden Ausführungsformen in Fig. 1, 4 und 5 dargestellt im vorderen Bereich des Basisteils 3 mithilfe eines Verbindungsmittels 12, vorzugsweise einer Schraube 11 samt passender Sicherungsscheibe, an der Unterseite des Basisteils 3 lösbar fixiert werden. Im hinteren Bereich des Basisteils 3 befindet sich bevorzugt mindestens eine Ausnehmung, mit welcher der hintere Teil der Sattelstrebe 5, vorzugsweise zwei Stäbe, in Eingriff gebracht werden kann. Damit lässt sich auch die Sattelstrebe 5 sehr einfach am Basisteil 3 fixieren und bei einem etwaigen Defekt eines der Teile, kann dieses sehr einfach ausgetauscht werden.

## Patentansprüche

1. Sattel für Fahrräder umfassend:
• einen oberen, aufblasbaren Softteil (1) umfassend zumindest ein Luftventil (6', 6"),
• einen unteren, starren Stützteil (2),
wobei der Stützteil (2) an der Unterseite des Softteils (1) befestigt, vorzugsweise verschraubt oder verklebt, ist,
wobei der Softteil (1) zumindest eine erste Luftkammer (1') im vorderen Sattelbereich und zumindest eine zweite Luftkammer (1") im hinteren Sattelbereich umfasst,
wobei der Softteil (1) an der Unterseite zwischen der zumindest einen ersten Luftkammer (1') und der zumindest einen zweiten Luftkammer (1") eine keilförmige Ausnehmung (4) aufweist,
• einen starren Basisteil (3), wobei der Basisteil (3) mit einer Sattelstrebe (5) zur Verbindung an einer Sattelstütze verbunden ist, wobei der Stützteil (2) am Basisteil (3) mithilfe eines Koppelmechanismus lösbar fixierbar ist,
**dadurch gekennzeichnet, dass**
der Basisteil (3) und der Stützteil (2) Verbindungsmittel (9, 10, 10') umfassen, welche nach Art einer Schnappverbindung zusammenwirken.

2. Sattel nach Anspruch 1, **dadurch gekennzeichnet, dass** die keilförmige Ausnehmung (4) Flanken (4',4") ausbildet, welche einen Neigungswinkel (α) zwischen 0° und 30° einschließen.

3. Sattel nach einem der Ansprüche 1 oder 2, **dadurch gekennzeichnet, dass** der Softteil (1) aus einem Material ausgewählt aus der Gruppe bestehend aus Polyurethan, thermoplastische Elastomere, Silikon und Gummi gefertigt ist.

4. Sattel nach einem der Ansprüche 1 bis 3, **gekennzeichnet durch** zumindest ein erstes und ein zweites Luftventil (6', 6"), wobei die Luftventile (6', 6") an der Unterseite des Softteils (1) angebracht sind, wobei das erste Luftventil (6') mit der ersten Luftkammer (1') und das zweite Luftventil (6") mit der zweiten Luftkammer (1") verbunden ist, wobei mithilfe der Luftventile (6', 6") die Luftkammern (1', 1") auf- und abpumpbar sind.

5. Sattel nach Anspruch 4, **dadurch gekennzeichnet, dass** der Stützteil (2) Ausnehmungen (7', 7") aufweist, durch welche sich die zumindest zwei an der Unterseite des Softteils (1) angebrachten Luftventile (6', 6") erstrecken.

6. Sattel nach einem der Ansprüche 1 bis 5, **dadurch gekennzeichnet, dass** zwischen der ersten und zweiten Luftkammer (1', 1") kein Luftaustausch stattfindet.

7. Sattel nach einem der Ansprüche 1 bis 6, **dadurch gekennzeichnet, dass** der Softteil (1) an der Unterseite eine Ausnehmung (2') aufweist, wobei die Ausnehmung (2') im Wesentlichen der Grundform des Stützteils (2) entspricht.

8. Sattel nach einem der Ansprüche 1 bis 7, **gekennzeichnet durch** in der zweiten Luftkammer (1") im hinteren Sattelbereich angeordnete Lamellen.

9. Sattel nach einem der Ansprüche 1 bis 8, wobei das Stützteil (2) aus Metall gefertigt ist.

10. Sattel nach einem der Ansprüche 1 bis 9, **dadurch gekennzeichnet, dass** der Stützteil (2) im vorderen Sattelbereich ein vorderes Verbindungsmittel (9) und im hinteren Sattelbereich ein hinteres Verbindungsmittel (10) umfasst.

11. Sattel nach Anspruch 1, wobei der Stützteil (2) im hinteren Sattelbereich einen Verriegelungsabschnitt mit einer Ausnehmung (10‴) umfasst, mit welcher ein Schnapphaken (10") an der Hinterseite des Basisteils (3) lösbar verbindbar ist, wobei der Stützteil (2) im vorderen Sattelbereich einen Einhängehaken (9') umfasst, welcher an der Vorderseite des Basisteils (3) einhängbar ist.

12. Sattel nach einem der Ansprüche 11, wobei der Basisteil (3) Ausnehmungen (8', 8") aufweist, durch welche sich die zumindest zwei an der Unterseite des Softteils (1) angebrachten Luftventile (6', 6") erstrecken.

13. Sattel nach einem der Ansprüche 11 bis 12, wobei der Basisteil (3) eine sattelförmige Form aufweist und/oder aus Kunststoff gefertigt ist.

## Claims

1. A saddle for bicycles, comprising:
• an upper, inflatable soft part (1) comprising at least one air valve (6', 6"),
• a lower, rigid support part (2),
wherein the support part (2) is attached, preferably screwed or glued, to the underside of the soft part (1),
wherein the soft part (1) comprises at least one first air chamber (1') in the front saddle region and at least one second air chamber (1") in the rear saddle region,
wherein the soft part (1) has a wedge-shaped recess (4) on the underside between the at least one first air chamber (1') and the at least one second air chamber (1"),
• a rigid base part (3), wherein the base part (3) is connected to a saddle strut (5) for connection to a saddle support, wherein the support part (2) may be detachably fixed to the base part (3) by means of a coupling mechanism,
**characterized in that**
the base part (3) and the support part (2) comprise connecting means (9, 10, 10'), which cooperate in the manner of a snap connection.

2. The saddle according to claim 1, **characterized in that** the wedge-shaped recess (4) forms flanks (4', 4"), which enclose an angle of inclination (α) between 0° and 30°.

3. The saddle according to any of claims 1 or 2, **characterized in that** the soft part (1) is made of a material selected from the group consisting of polyurethane, thermoplastic elastomers, silicone and rubber.

4. The saddle according to any of claims 1 to 3, **characterized by** at least a first and a second air valve (6', 6"), wherein the air valves (6', 6") are attached to the underside of the soft part (1), wherein the first air valve (6') is connected to the first air chamber (1') and the second air valve (6") is connected to the second air chamber (1"), wherein the air chambers (1', 1") may be inflated and deflated with the aid of the air valves (6', 6").

5. The saddle according to claim 4, **characterized in that** the support part (2) has recesses (7', 7"), through which the at least two air valves (6', 6") attached to the underside of the soft part (1) extend.

6. The saddle according to any of claims 1 to 5, **characterized in that** no air exchange takes place between the first and second air chambers (1', 1").

7. The saddle according to any of claims 1 to 6, **characterized in that** the soft part (1) has a recess (2') on the underside, wherein the recess (2') essentially corresponds to the basic shape of the support part (2).

8. The saddle according to any of claims 1 to 7, **characterized by** fins arranged in the second air chamber (1") in the rear saddle region.

9. The saddle according to any one of claims 1 to 8, wherein the support part (2) is made of metal.

10. The saddle according to any of claims 1 to 9, **characterized in that** the support part (2) comprises a front connecting means (9) in the front saddle region and a rear connecting means (10) in the rear saddle region.

11. The saddle according to claim 1, wherein the support part (2) in the rear saddle region comprises a locking section with a recess (10‴), by means of which a snap hook (10") may be releasably connected to the rear side of the base part (3), wherein the support part (2) in the front saddle region comprises a hook-in hook (9'), which may be hooked into the front side of the base part (3).

12. The saddle according to any of the claims 11, wherein the base part (3) comprises recesses (8', 8"), through which the at least two air valves (6', 6") attached to the underside of the soft part (1) extend.

13. The saddle according to any of claims 11 to 12, wherein the base part (3) has a saddle-like shape and/or is made of plastic.

## Revendications

1. Siège pour bicyclette comprenant
▪ une partie souple supérieure gonflable (1) comportant au moins une valve d'air (6'6"),
▪ une partie de support rigide inférieure (2),
la partie de support (2) étant fixée, de préférence vissée ou collée, à la face inférieure de la partie souple (1),
la partie souple (1) comportant au moins une première chambre à air (1') dans la région de siège avant et au moins une seconde chambre à air (1") dans la région de siège arrière,
la partie souple (1) présentant un évidement en forme de coin (4) sur la face inférieure entre l'au moins une première chambre à air (1') et l'au moins une seconde chambre à air (1"),
▪ une partie de base rigide (3), la partie de base (3) étant reliée à une patte de fixation de siège (5) destinée à être reliée à un support de siège, la partie de support (2) pouvant être fixée de manière amovible à la partie de base (3) au moyen d'un mécanisme de couplage, **caractérisé en ce que**
la partie de base (3) et la partie de support (2) comprennent des moyens de liaison (9, 10, 10') qui coopèrent à la manière d'un raccord par encliquetage.

2. Siège selon la revendication 1 **caractérisé en ce que** l'évidement en forme de coin (4) forme des flancs (4', 4") qui incluent un angle d'inclinaison (α) entre 0° et 30°.

3. Siège selon la revendication 1 ou 2 **caractérisé en ce que** la partie souple (1) est fabriquée en une matière choisie dans le groupe composé de polyuréthane, élastomères thermoplastiques, silicone et caoutchouc.

4. Siège selon l'une des revendications 1 à 3 **caractérisé par** au moins une première valve d'air et une seconde valve d'air (6, 6"), les valves d'air (6', 6") étant fixées à la face inférieure de la partie souple (1), la première valve d'air (6') étant reliée à la première chambre à air (1') et la seconde valve d'air (6") étant reliée à seconde chambre à air (1"), les chambres à air (1', 11") pouvant être gonflées et dégonflées à l'aide des valves d'air (6', 6").

5. Siège selon la revendication 4 **caractérisé en ce que** la partie de support (2) présente des évidements (7', 7") par lesquels passent les au moins deux valves d'air (6', 6") qui sont fixées à la face inférieure de la partie souple (1).

6. Siège selon l'une des revendications 1 à 5 **caractérisé en ce qu'**aucun échange d'air n'a lieu entre la première et la seconde chambre à air (1', 1").

7. Siège selon l'une des revendications 1 à 6 **caractérisé en ce que** la partie souple (1) présente un évidement (2') à la face inférieure, l'évidement (2') correspondant pour l'essentiel à la forme de base de la partie de support (2).

8. Siège selon l'une des revendications 1 à 7 **caractérisé par** des lamelles disposées dans la seconde chambre à air (1") dans la région de siège arrière.

9. Siège selon l'une des revendications 1 à 8, la partie de support (2) étant fabriquée en métal.

10. Siège selon l'une des revendications 1 à 9 **caractérisé en ce que** la partie de support (2) comprend dans la région de siège avant un moyen de liaison avant (9) et dans la région de siège arrière un moyen de liaison arrière (10).

11. Siège selon la revendication 1 **caractérisé en ce que** la partie de support (2) comprend dans la région de siège arrière une section de verrouillage comportant un évidement (10‴) permettant de relier de façon amovible un crochet d'encliquetage (10") à la face arrière de la partie de base (3), la partie de support (2) comprenant dans la région de siège avant un crochet de suspension (9') pouvant être suspendu à la face avant de la partie de base (3).

12. Siège selon l'une des revendications 11, la partie de base (3) présentant des évidements (8', 8") par lesquels passent les au moins deux valves d'air (6', 6") qui sont fixées à la face inférieure de la partie souple (1).

13. Siège selon l'une des revendications 11 à 12, la partie de base (3) présentant une forme de selle et/ou étant fabriquée en matière synthétique.
